# EUROPÄISCHE PATENTSCHRIFT

(11) **EP 1 407 079 B1**
(45) Veröffentlichungstag und Bekanntmachung des Hinweises auf die Patenterteilung: **13.04.2011**
(21) Anmeldenummer: 02719794.6
(22) Anmeldetag: 09.02.2002
(51) Int. Cl.: D21H 27/00, C08J 5/24

(54) **VORIMPRÄGNAT**
PREPREG
PREIMPREGNE

(30) Priorität: 14.07.2001 DE 10134302
(43) Veröffentlichungstag der Anmeldung: 14.04.2004
(73) Patentinhaber: Technocell Dekor GmbH & Co. KG, 49086 Osnabrück (DE)
(72) Erfinder: SCHNIEDER, Christa, 21385 Amelinghausen (DE); HALLER, Heinz, 73207 Plochingen (DE)
(74) Vertreter: Minderop, Ralph H.
(86) Internationale Anmeldenummer: PCT/EP2002/001386
(87) Internationale Veröffentlichungsnummer: WO 2003/008708

(56) Entgegenhaltungen:
- WO-A1-00/53667
- DE-A1- 19 728 250
- US-A- 4 377 458
- US-A- 4 652 324
- US-A- 5 607 769
- US-A- 6 143 369
- US-A- 6 146 746

## Beschreibung

Die Erfindung betrifft Vorimprägnate, ein Verfahren zu deren Herstellung sowie daraus erhältliche Dekorimprägnate oder dekorative Beschichtungswerkstoffe.

Dekorative Beschichtungswerkstoffe, sogenannte Dekorpapiere oder Dekorfolien, werden vorzugsweise zur Oberflächenbeschichtung bei der Möbelherstellung und im Innenausbau, insbesondere Laminatböden, eingesetzt. Unter Dekorpapier/Dekorfolie versteht man kunstharzgetränkte oder kunstharzgetränkte und oberflächenbehandelte, bedruckte oder unbedruckte Papiere. Dekorpapiere/ Dekorfolien werden mit einer Trägerplatte verleimt oder verklebt.

Je nach Art des Imprägniervorgangs unterscheidet man zwischen Dekorpapieren/Dekorfolien mit durchimprägniertem Papierkern und sogenannten Vorimprägnaten, bei denen das Papier in der Papiermaschine online oder offline nur teilweise imprägniert wird. Keines der bislang bekannten Vorimprägnate, die formaldehydhaltige duroplastische Harze oder formaldehydarme acrylatische Bindemittel enthalten, erfüllt alle an sie gestellten Anforderungen wie gute Bedruckbarkeit, hohe Spaltfestigkeit, gute Verklebbarkeit und gute Lackierbarkeit.

Für das Aufkleben der Dekorfolien auf Holzwerkstoffe wie Spannplatten oder MDF-Platte werden üblicherweise Harnstoffleime oder Polyvinylacetat (PVAC)-Leime eingesetzt. Die Verklebung der Dekorfolien ist nicht immer gewährleistet.

Schichtpreßstoffe (High Pressure Laminates) sind Laminate, die durch Verpressen mehrerer imprägnierter, aufeinander geschichteter Papiere entstehen. Der Aufbau dieser Schichtpreßstoffe besteht im allgemeinen aus einem höchste Oberflächenbeständigkeit erzeugenden transparenten Auflageblatt (Overlay), einem harzgetränkten Dekorpapier und einem oder mehreren phenolbeharzten Kraftpapieren. Als Unterlage hierfür werden beispielsweise Hartfaser- und Holzspanplatten sowie Sperrholz eingesetzt.

Bei den nach dem Kurztaktverfahren hergestellten Laminaten (Low Pressure Laminates) wird das mit Kunstharz getränkte Dekorpapier direkt mit einer Unterlage, beispielsweise einer Spanplatte unter Anwendung eines niedrigen Drucks verpresst.

Das bei den oben genannten Beschichtungswerkstoffen verwendete Dekorpapier wird weiß oder farbig mit oder ohne zusätzlichen Aufdruck eingesetzt.

An sogenannte Dekorrohpapiere als Ausgangsmaterialien zur Herstellung der oben genannten Beschichtungswerkstoffe werden besondere Anforderungen gestellt wie hohe Opazität für eine bessere Abdeckung der Unterlage, gleichmäßige Formation und Grammatur des Blatts für eine gleichmäßige Harzaufnahme, hohe Lichtbeständigkeit, hohe Reinheit und Gleichmäßigkeit der Farbe für gute Reproduzierbarkeit des aufzudruckenden Musters, hohe Nassfestigkeit für einen reibungslosen Imprägniervorgang, entsprechende Saugfähigkeit zur Erlangung des erforderlichen Harzsättigungsgrads, Trockenfestigkeit, die bei Umrollvorgängen in der Papiermaschine und beim Bedrucken in der Druckmaschine.

Zur Erzeugung einer dekorativen Oberfläche werden die Dekorrohpapiere bedruckt. In erster Linie kommt das sogenannte Rotationstiefdruckverfahren zum Einsatz, in dem das Druckbild mit Hilfe mehrerer Gravurwalzen auf das Papier übertragen wird. Die einzelnen Druckpunkte sollen vollständig und möglichst intensiv auf die Papieroberfläche übertragen werden. Aber gerade im Dekortiefdruck wird nur ein geringer Teil der auf der Gravurwalze vorhandenen Rasterpunkte auf die Papieroberfläche übertragen. Es entstehen sogenannte Missing Dots, d.h. Fehlstellen. Häufig dringt die Druckfarbe zu tief in das Papiergefüge ein, wodurch die Farbintensität verringert wird. Voraussetzungen für ein gutes Druckbild mit wenig Fehlstellen und hoher Farbintensität sind eine möglichst glatte und homogene Oberflächentopografie und ein abgestimmtes Farbannahmeverhalten der Papieroberfläche.

Aus diesem Grunde werden Rohpapiere gewöhnlich mit sogenannten Softkalandern, teilweise auch sogenannten Januskalandern geglättet. Diese Behandlung kann zu Quetschungen der Papieroberfläche und damit zu deren Verdichtung führen, was sich nachteilig auf die Harzaufnahmefähigkeit auswirkt.

Die für die Imprägnierung der Dekorrohpapiere üblicherweise eingesetzten Tränkharzlösungen sind Harze auf der Basis von Harnstoff-, Melamin- oder Phenolharzen und formaldehydhaltig und führen zu spröden Produkten mit schlechter Weiterreißfestigkeit und Bedruckbarkeit.

In der DE 197 28 250 A ist der Einsatz formaldehydfreier Harze auf der Basis eines Acrylsäureester/Styrol-Copolymers zur Herstellung vergilbungsfreier Vorimprägnate beschrieben. Nachteilig an diesem Material ist, dass es zu einem Produkt mit schlechter Spaltfestigkeit führt.

Ein ähnliches Problem tritt bei der in der DE 29 03 172 A beschriebenen Folie auf. Die Imprägnierflüssigkeit, die ein mit einem Aminoplasten vernetzbares Kunstharz enthält, dringt sehr ungleichmäßig in den Papierkern ein, so dass Zonen mit unterschiedlichem Imprägnierungsgrad entstehen, was zur Aufspaltung des Papierkerns führen kann. Nachteilig ist außerdem, dass die Imprägnierflüssigket nicht formäldehydfrei ist.

Die DE 197 35 959 A1 beschreibt den Einsatz thermisch härtbarer Zusammensetzungen als Bindemittel für Formkörper und stellt fest, dass sich mit diesem Bindemittel durch Imprägnierung von Papier und anschließende schonende Trocknung nach den bekannten Verfahren Laminate, z.B. für dekorative Anwendungen, herstellen lassen. Diese werden in einem zweiten Schritt auf das zu beschichtende Substrat unter Einwirkung von Hitze und Druck auflaminiert, wobei die Bedingungen so gewählt werden, dass es zur Aushärtung des Bindemittels kommt. Neue Vorimprägnate Holz- und Kunststoffverarbeitung 6/2001, S. 36 bis 38 beschreibt eine Vorimprägnatspezialität, zur deren Herstellung das Rohpapier in zwei parallel zu einander ablaufenden Verfahrensschritte von einer Seite (Rückseite) imprägniert und auf der Oberfläche der anderen Seite (Vorderseite) mit einem Strich aus Pigment und Bindemittel versehen wird. Die Imprägnierung soll mit einem Amninoplasten stattfinden. Bedruckt wird der Pigment-/Bindemittelstrich. Auf diese Weise soll gegenüber bekannten Vorimprägnaten eine wesentlich bessere Bedruckbarkeit erzielt werden. Die WO 99/28554 A1 offenbart ein Dekorrohpapier mit einem Cop₆₀-Wert von 40 % des Flächengewichts des Papiers. Ziel der technischen Lehre dieses Dokuments ist es, ein imprägnierfähiges Rohpapier zur Herstellung von Kurztaktlaminaten und Hochdrucklaminaten bereitzustellen, das eine Tio₂- und Imprägnierharzeinsparung ermöglicht, ohne.dass die Endeigenschaften der fertigen Beschichtung negative beeinflusst werden. Zur Einstellung dieses Cop-Werts wird das Rohpapier beispielsweise mit einem hydrophilen Polymer vorbehandelt. Die DE 693 21 53 T2 offenbart ein im Wesentlichen formaldehydfreies mit einem Styrol/Ethylacrylat/Butylacrylat-Copolymer und einem wasserlöslichen Bindemittel sowie einem vernetzbaren Polymer imprägniertes Papier. Das Wochenblatt für Papierfabrikation 6/2000, S. 350 bis 355 beschreibt das einseitige Auftragen von Imprägnierharzen. Die DE 44 13 619 A1 schlägt das Auftragen einer strahlenhärtbaren Schicht, insbesondere Acrylatschicht, auf einer Seite eines Rohpapiers vor der Imprägnierung desselben vor.

Die zu den Dekorfolien mit Finishfoliencharakter neben Vorimprägnaten gehörenden sogenannten Postimprägnate werden nach dem Dekordruck-imprägniert. Hierzu werden bisher einseitig glatte Dekorpapiere von 40 bis 80 g/m² mit Mischungen aus Polyacrylaten und Harnstofformaldehyd-Harzen getränkt. Die hier verwendeten Acrylatdispersionen penetrieren dabei nur sehr langsam in das Papier, so dass ein Großteil der eingesetzten Acrylate an der Ober- und Unterseite angereichert vorliegt, während im Papierkern eine relative Anreicherung der Harnstofformaldehyd-Harzkomponente stattfindet. Dies kann Probleme bei der Weiterverarbeitung bewirken. Außerdem werden die Anforderungen an Verklebbarkeit und Spaltfestigkeit nicht immer erfüllt.

Die DE 197 35 959 A1 beschreibt die Verwendung thermisch härtbarer, wässriger Zusammensetzungen als Bindemittel für Formkörper. Darüber hinaus ist der Hinweis enthalten, dass sich mit den Zusammensetzungen durch Imprägnierung von Papier und anschließende schonende Trocknung nach dem bekannten Verfahren sogenannte Laminate für dekorative Anwendungen herstellen lassen. Diese werden in einem zweiten Schritt auf das zu beschichtende Substrat unter Einwirkung von Hitze und Druck auflaminiert, wobei die Bedingungen so gewählt sind, dass es zur Aushärtung des Bindemittels kommt.

Der Erfindung liegt daher die Aufgabe zugrunde, Vorimprägnate bereitzustellen, die die oben genannten Nachteile nicht aufweisen und sich insbesondere durch hohe Oberflächengüte, gute Bedruckbarkeit, hohe Spaltfestigkeit, gute Lackierbarkeit (guter Lackstand) und Verklebbarkeit mit üblichen Klebstoffen auszeichnet.

Gelöst wird diese Aufgabe durch ein Vorimprägnat, das erhältlich ist durch Imprägnieren eines Rohpapiers mit einem thermisch härtbaren, formaldehydfreien Harz; das Vorimprägnat weist nach Trocknung eine Restfeuchte von 2 bis 3 Gew.% auf, wobei das Harz ein thermoplastisches Verhalten zeigt, das Harz des Vorimprägnats unvernetzt ist und ein Polymer ist, das
a) mindestens ein durch radikalische Polymerisation erhältliches Polymerisat, das weniger als 5 Gew.% einer α,β-ethylenisch ungesättigten Mono- oder Dicarbonsäure einpolymerisiert enthält,
b) mindestens ein durch radikalische Polymerisation erhältliches Polymerisat, das mehr als 15 Gew.% einer α,β-ethylenisch ungesättigten Mono- oder Dicarbonsäure einpolymerisiert enthält, und
c) mindestens ein Alkanolamin mit mindestens zwei Hydroxylgruppen,
enthält.

Das Harz des Vorimprägnats weist bei einer Wärmebehandlung des Vorimprägnats über einen Zeitraum von etwa 40 Sekunden bei etwa 132 °C einen Vernetzungsgrad von höchstens etwa 85%, vorzugsweise höchstens etwa 80%, auf.

Der Vernetzungsgrad wurde bestimmt, in dem bei einem Vorimprägnat eine Fläche von 100 cm² ausgestanzt, gewogen und 15 Minuten lang in Wasser einer Temperatur von 60 °C gehalten, gespült, im Ofen bei 130°C getrocknet und erneut gewogen wird. Aus der Gewichtsdifferenz und dem bekannten Auftrag des Imprägnierharzes (13 g/m² trocken) lässt sich der lösliche Anteil des Polymers bestimmen. Vernetzungsgrad in % = 100 - löslicher Anteil in %.

Unter Vorimprägnat werden erfindungsgemäß mit Harz teilimprägnierte Papiere verstanden. Der Anteil des Harzes beträgt 20 bis 35 Gew.%, vorzugsweise 25 bis 30 Gew.%, bezogen auf das Rohpapiergewicht.

Gemäß einer bevorzugten Ausführungsform der Erfindung beträgt die Restfeuchte des Vorimprägnats bis zu etwa 2,5%. Bei Restfeuchten von deutlich weniger als 2%, beispielsweise etwa 1,5%, kann es zu Bahnabrissen der Papierbahn kommen. Bei Restfeuchten von mehr als 3% kann das Vorimprägnat an Maschinenteilen in der weiterverarbeitenden Einrichtung haften bleiben, und Harzreste können sich an Teilen der Maschine festsetzen. Darüber hinaus bewirken höhere Restfeuchten den Nachteil der langsamen Vernetzung unter Wärmeeinwirkung bei der Weiterverarbeitung und des Fehlens der Versiegelungswirkung beim Laminieren auf Holz.

Zum Imprägnieren geeignete Polymere sind solche, die bei Temperaturen bis 150 °C ein thermoplastisches Verhalten und bei Temperaturen über 150 °C ein duroplastisches Verhalten infolge Vernetzung aufweisen.

Als Vernetzungskomponente können ein mehrwertiger Alkohol aus der Gruppe der Diole, Glykole oder Zuckeralkohole wie Pentaerythrit, Trimethylolpropan und deren Gemischen ausgewählt sein oder Alkanolamine eingesetzt werden.

Bevorzugte α,β-ethylenisch ungesättigten Mono- oder Dicarbonsäure sind solche mit drei bis sechs Kohlenstoffatomen, insbesondere Acrylsäure, Methacrylsäure, Crotonsäure, Fumarsäure, Maleinsäure, 2-Methylmaleinsäure oder Itaconsäure sowie Halbester von ethylenisch ungesättigten Dicarbonsäuren wie Maleinsäuremonoalkylester von C₁ bis C₈-Alkanolen. Besonders bevorzugt ist ein Acrylsäure/Maleinsäure-Copolymer. Das Alkanolamin kann ein solches der allgemeinen Formel N(R1,R2,R3) sein, worin R1 ein H-Atom, eine C₁-₁₀-Alkylgruppe oder eine C₁-₁₀-Hydroxyalkylgruppe stehen kann und R2 und R3 für eine C₁-₁₀-Hydroxyalkylgruppe stehen können. Geeignete Alkanolamine sind beispielsweise Diethanolamin, Triethanolamin und Methyldiethanolamin. Solche Harze, deren Herstellung und Alkanolamine sind offenbart in der DE 197 35 959 A1 und in der WO 97/31060, auf deren Offenbarungen für die Zwecke der Offenbarung dieser Erfindung Bezug genommen wird.

Das erfindungsgemäß zu verwendende Polymer (I) kann allein oder in Abmischung mit anderen Polymeren (II), insbesondere mit Styrol/Butadien- oder Styrol/Acrylat-Copolymeren, eingesetzt werden, wobei das Mengenverhältnis I/II 90:10 bis 65:35, insbesondere 80:20 bis 70:30, betragen kann. Das andere Polymer (II) kann auch ein strahlenhärtbares Polymer sein das beispielsweise durch Elektronen- oder UV-Strahlen gehärtet werden kann. Dieses liegt in dem erfindungsgemäßen Vorimprägnat ungehärtet vor.

Das erfindungsgemäß zu verwendende Polymer wird als wässrige Lösung zusammen-mit einem mehrwertigen Alkohol als Vernetzungskomponente mindestens auf eine Seite der Papierbahn aufgebracht und anschließend bis zu einer Restfeuchte von 2 bis 3%, vorzugsweise bis etwa 2,5%, getrocknet. In diesem Zustand ist das Polymer in das Rohpapier eingedrungen; das Rohpapier ist imprägniert und das Polymer im Wesentlichen nicht vernetzt.

Die Konzentration des Polymers in der zum Imprägnieren verwendeten Lösung kann 5 bis 50 Gew.%, vorzugsweise 10 bis 40 Gew.% und besonders bevorzugt 15 bis 30 Gew.%, jeweils bezogen auf die Masse der wässrigen Polymerlösung, betragen. Das Gemisch aus Wasser und Polymer kann weitere Additive enthalten.

Das erfindungsgemäß zu verwendende Polymer kann auf die Papierbahn in einer Menge von 10 bis 70%, vorzugsweise von 15 bis 60%, besonders bevorzugt von 20 bis 50% des Flächengewichts des Rohpapiers aufgetragen werden.

In einer besonderen Ausgestaltung der Erfindung kann die Vorderseite des Rohpapiers zunächst mit einem mit Wasser verdünnbaren elektronenstrahlenhärtbaren Acrylat in Form einer Dispersion, Emulsion oder Lösung beschichtet und anschließend erfindungsgemäß von der Rückseite imprägniert werden. Eine für die Beschichtung der Vorderseite geeignete, elektronenstrahlenhärtbare Beschichtungszubereitung ist in der DE 44 13 619 A beschrieben, auf deren Offenbarung für die Zwecke der Offenbarung dieser Erfindung Bezug genommen wird.

Überraschend wurde festgestellt, dass die erfindungsgemäß beschichteten Rohpapiere eine Oberfläche mit hoher Glätte und eine Reihe weiterer guter Eigenschaften aufweisen wie gute Spaltfestigkeit sowie eine gute Verklebbarkeit mit Harnstoff- und PVAC-Leimen. Darüber hinaus lassen mikroskopische Aufnahmen der bedruckten Papiere eine vollständigere Übertragung der einzelnen Druckpunkte erkennen, was durch weniger Fehlstellen ersichtlich ist.

Das erfindungsgemäß eingesetzte Polymer zeichnet sich neben guter Verklebbarkeit mit üblichen Klebstoffen auch durch Selbstklebeeigenschaften (Siegelfähigkeit) aus. So kann bei der Verpressung eines von der Rückseite mit der erfindungsgemäßen Polymerlösung imprägnierten Dekorpapiers mit dem Träger auf die Verwendung von Klebstoffen verzichtet werden. Als Abfall während der Produktion anfallendes Vorimprägnat kann in einer Menge von bis 15 Gew.%, bezogen auf das Gewicht der Pulpe, in die Produktion rezyklisiert werden

Besonders im Hinblick auf die eingangs erwähnten Vor- und Postimprägnate wurden mit dem erfindungsgemäßen Vorimprägnat sehr gute Ergebnisse erzielt. Vor allem die bei den herkömmlichen Vorimprägnaten übliche schlechte Bedruckbarkeit und geringe Spaltfestigkeit konnten deutlich verbessert werden. Dabei kann die Bedruckbarkeit des erfindungsgemäßen Vorimprägnats mit der Bedruckbarkeit eines Postimprägnats verglichen werden. Daraus ergeben sich Materialersparnisse, da man mit einer für ein Vorimprägnat üblichen Auftragsmenge des Imprägnierharzes die Druckqualität eines Postimprägnats erreichen kann.

Ein weiterer Vorteil ergibt sich im Hinblick auf das Flächengewicht der zu imprägnierenden Rohpapiere. Konnten bisher bei Vorimprägnaten Rohpapiere mit einem Flächengewicht von höchstens 70 g/m² eingesetzt werden, so kann das Flächengewicht wegen der besseren Penetration des erfindungsgemäß zu verwenden Polymers in den Papierkern auf 100 bis 150 g/m² erhöht werden. Erfolgte bisher die Imprägnierung bei Geschwindigkeiten der Papiermaschine von etwa 200 m/Min., lässt das erfindungsgemäße Verfahren Imprägniergeschwindigkeiten von 300 bis 380 m/Min. zu.

Die erfindungsgemäß zu behandelnden Rohpapiere sind solche sein, die weder eine Leimung in der Masse noch eine Oberflächenleimung erfahren haben. Es handelt sich insbesondere um Papiere, die keinen Pigmentstrich aufweisen. Solche Papier können sogenannte Dekorrohpapiere sein. Diese bestehen im wesentlichen aus Zellstoffen, Pigmenten und Füllstoffen und üblichen Additiven. Übliche Additive können Naßfestmittel, Retentionsmittel und Fixiermittel sein. Dekorrohpapiere unterscheiden sich von üblichen Papieren durch den sehr viel höheren Füllstoffanteil oder Pigmentgehalt und das Fehlen einer beim Papier üblichen Masseleimung oder Oberflächenleimung.

Das erfindungsgemäß zu imprägnierende Rohpapier kann einen hohen Anteil eines Pigments oder eines Füllstoffs enthalten. Der Anteil des Füllstoffs im Rohpapier kann bis zu 55 Gew.%, insbesondere 11 bis 50 Gew.% oder 20 bis 45 Gew.%, bezogen auf das Papiergewicht, betragen. Geeignete Pigmente und Füllstoffe sind beispielsweise Titandioxid, Talkum, Zinksulfid, Kaolin, Aluminiumoxid, Calciumcarbonat, Korund, Aluminium- und Magnesiumsilikate oder deren Gemische.

Geeignet für die erfindungsgemäße Imprägnierung sind auch sogenannte Overlaypapiere. Diese können ein Flächengewicht von 15 bis 80 g/m² aufweisen. Sie weisen eine Sauerstoffdurchlässigkeit nach Gurley von weniger als etwa 3 Sekunden auf und sind meist frei von Füllstoffen. Zur Erzeugung abriebfester Oberflächen können die Overlays an der Oberfläche 1 bis 25 g/m² Korund aufweisen.

Die erfindungsgemäßen Vorimprägnate sind nach dem Ink-Jet-Verfahren mit oder ohne eine Aufzeichnungsschicht bedruckbar.

Als Zellstoffe zur Herstellung der Rohpapiere können Nadelholzzellstoffe (Langfaserzellstoffe) und/oder Laubholzzellstoffe (Kurzfaserzellstoffe) verwendet werden. Auch der Einsatz von Baumwollfasern und Gemische derselben mit den zuvor genannten Zellstoffsorten können verwendet werden. Besonders bevorzugt wird beispielsweise eine Mischung aus Nadelholz-/Laubholz-Zellstoffen im Verhältnis 10:90 bis 90:10 oder beispielsweise Gemische aus Nadelholz-/Laubholz-Zellstoffen im Verhältnis 30:70 bis 70:30.

Vorzugsweise kann das Zellstoffgemisch einen Anteil an kationisch modifizierten Zellstoffasern von mindestens 5 Gew.%, bezogen auf das Gewicht des Zellstoffgemischs, enthalten. Als besonders vorteilhaft hat sich ein Anteil von 10 bis 50 Gew.%, insbesondere 10 bis 20 Gew.%, des kationisch modifizierten Zellstoffs im Zellstoffgemisch erwiesen. Die kationische Modifizierung der Zellstoffasern kann durch Reaktion der Fasern mit einem Epichlorhydrinharz und einem tertiären Amin erfolgen oder durch Reaktion mit quaternären Ammoniumchloriden wie Chlorhydroxypropyltrimethylammoniumchlorid oder Glycidyltrimethylammoniumchlorid. Kationisch modifizierte Zellstoffe sowie deren Herstellung sind beispielsweise aus DAS PAPIER, Heft 12 (1980) S.575-579 bekannt.

Die Rohpapiere können auf einer Fourdrinier-Papiermaschine oder einer Yankee-Papiermaschine hergestellt werden. Dazu kann das Zellstoffgemisch bei einer Stoffdichte von 2 bis 5 Gew.% bis zu einem Mahlgrad von 10 bis 45°SR gemahlen werden. In einer Mischbütte können die Füllstoffe wie Titandioxid und Talkum, und Naßfestmittel zugesetzt und mit dem Zellstoffgemisch gut vermischt werden. Der so erhaltene Dickstoff kann bis zu einer Stoffdichte von etwa 1 % verdünnt und soweit erforderlich weitere Hilfsstoffe wie Retentionsmittel, Entschäumer, Aluminiumsulfat und andere zuvor genannte Hilfsstoffe zugemischt werden. Dieser Dünnstoff wird über den Stoffauflauf der Papiermaschine auf die Siebpartie geführt. Es wird ein Faservlies gebildet und nach Entwässerung das Rohpapier erhalten, welches anschließend noch getrocknet wird. Die Flächengewichte der erzeugten Papiere können 15 bis 300 g/m² betragen.

Das Aufbringen der erfindungsgemäß zu verwendenden Polymerlösung kann in der Papiermaschine oder offline durch Aufsprühen, Tränken, Walzenauftrag oder Aufstreichen (Rakel) erfolgen. Besonders bevorzugt wird ein Auftrag über Leimpressen oder Filmpressen. Das Polymer kann auch der Zellstoffsuspension als Verfestiger in Konzentrationen von bis zu 5 Gew.%, bezogen auf die Masse der Pulpe, zugesetzt werden.

Nach Trocknung können die Vorimprägnate noch bedruckt und lackiert werden und anschließend auf ein Substrat wie eine Holzplatte aufgebracht werden. Hierbei ist die Eigenschaft der erfindungsgemäß eingesetzten Polymere, bis zu bestimmten Temperaturen thermoplastisch, also verformbar und flexibel zu sein, bei der Weiterverarbeitung der damit imprägnierten Papiere sehr günstig. So können beispielsweise Vorimprägnate problemlos aufgerollt oder aber auch dreidimensional verformt werden, bevor sie im letzten Arbeitsschritt mit dem Träger heiß verpresst werden. Durch die Temperatureinwirkung erfolgt die Vernetzung des Polymers und somit der Übergang zu duroplastischen Eigenschaften.

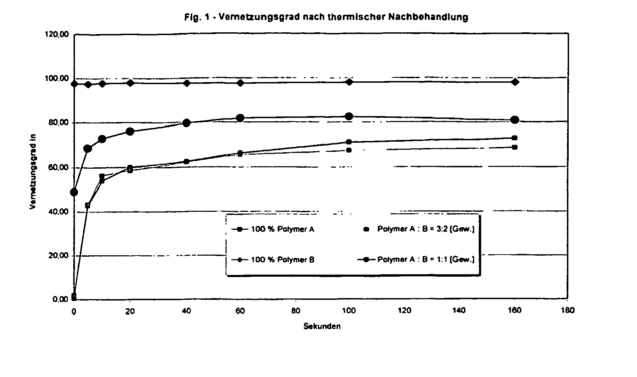

Fig. 1 zeigt eine grafische Darstellung, die beispielhaft die Entwicklung des Vernetzungsgrads bei einer Temperatur von 132 °C über einen Zeitraum von 160 Sekunden von drei erfindungsgemäßen Vorimprägnaten und einem Vergleichs-Vorimprägnat zeigt.

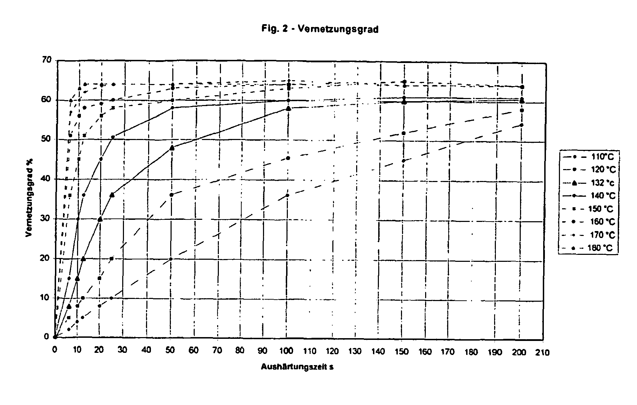

Fig. 2 zeigt die Abhängigkeit des Vernetzungsgrads des Harzes eines erfindungsgemäß imprägnierten Vorimprägnats über die Zeit bei unterschiedlichen Temperaturen.

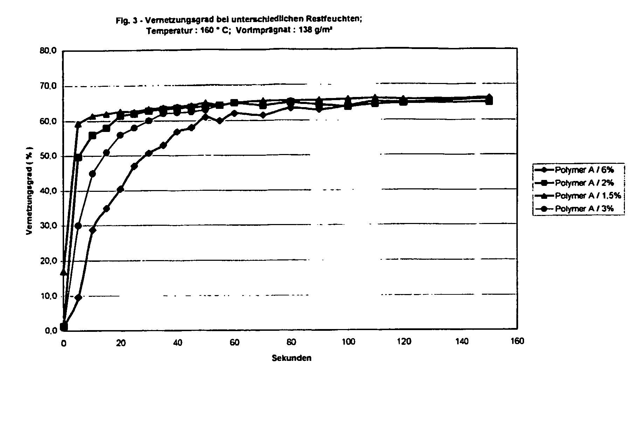

Fig. 3 zeigt die Auswirkung unterschiedlicher Restfeuchtegehalte auf die Vernetzung des Imprägnierharzes. Aus dieser Darstellung ist ersichtlich, dass bei höheren Feuchtegehalten die Vernetzung zu langsam erfolgt, was unwirtschaftlich bei der Weiterverarbeitung ist.

Die folgenden Beispiele dienen der weiteren Erläuterung der Erfindung. Angaben in Gewichtsprozent beziehen sich auf das Gewicht des Zellstoffs, sofern nichts anderes angegeben ist.

### Beispiel 1

Ein Rohpapier wurde hergestellt aus einem Zellstoffgemisch aus 80 % Eukalyptuszellstoff und 20% Nadelholzsulfatzellstoff mit 0,6 % Epichlorhydrinharz als Naßfestmittel, 0,11 % eines Retentionshilfsmittels und 0,03 % eines Entschäumers. Die Mischung wurde mit Aluminiumsulfat auf einen pH-Wert von 6,5 eingestellt und der Mischung ein Pigmentgemisch aus 29 Gew.% Titandioxid und 5,2 Gew.% Talkum zugefügt.

Mit einer Fourdrinier-Papiermaschine wurde ein Rohpapier mit einem Flächengewicht von 50 g/m² und einem Aschegehalt von 23 Gew.% Asche hergestellt.

Dieses Rohpapier wurde mit einer Lösung einer modifizierten Polyacrylsäure und eines mehrwertigen Alkohols in einer Leimpresse von der Vorderseite imprägniert, wobei mit Wasser ein Feststoffgehalt von etwa 30% eingestellt wurde. Die anschließende Trocknung des Papiers erfolgte bei 120 °C bis zu einer Restfeuchte von 2%. Die Auftragsmenge nach der Trocknung betrug 13 g/m².

### Beispiel 2

Das Rohpapier aus Beispiel 1 wurde auf der Vorderseite in der Leimpresse mit einer wässrigen Lösung imprägniert, die 2 Teile einer modifizierten, mit Polyolen vernetzbaren Polyacrylsäure und 1 Teil eines Styrol/Butadien-Copolymers enthielt. Der Feststoffgehalt der Lösung wurde mit Wasser auf etwa 30% eingestellt. Die Auftragsmenge im trockenen Zustand betrug 12 g/m². Die Proben wurden mit einem Laborkalander satiniert.

Die folgende Tabelle 1 zeigt die Ergebnisse der Prüfungen der erfindungsgemäß behandelten Papierproben im Vergleich zu klassisch imprägnierten Papieren auf Aminoplastbasis mit Formaldehyd (Vergleich 1) und auf der Basis einer Styrol/Butadien/Acrylat-Dispersion ohne Formaldehyd (Vergleich 2) .

Die Bestimmung der Glätte erfolgte gemäß DIN 53 107 (TAPPI sm 48). Die mit dem erfindungsgemäß verwendeten Polymer behandelten Proben zeigen höhere Glätte als die Vergleichsproben (Tabelle 2).

Die Spaltfestigkeit wurde nach einer internen Prüfmethode gemessen. Der Lackstand erteilt Auskunft darüber, ob das Harz gleichmäßig in das Papier eingedrungen ist, so dass keine Zellstofffasern aus dem Papier herausragen.

**Tabelle 1**

| Prüfung | Beispiel 1 | Beispiel 2 | Vergleich 1 | Vergleich 2 |
|---|---|---|---|---|
| Spaltfestigkeit | Stufe 5 = sehr gut | Stufe 5 = sehr gut | Stufe 4 = gut | Stufe 1 = mangelhaft |
| Verklebbarkeit mit UF-Leimen | sehr gut | sehr gut | sehr gut | ausreichend |
| Verklebbarkeit mit PVAc | gut | gut | gut | sehr gut |
| Lackstand | sehr gut | sehr gut | gut | gut |
| Siegelfestigkeit | ja | ja | nein | nein |

Ein Vorimprägnat mit einem Rohpapierflächengewicht von 50 g/m², einer Restfeuchte nach dem Trocknen von 2% und einer Flächenmasse nach Imprägnieren und Trocknen von 63 g/m² wurde bei einer Temperatur von 132 °C thermisch behandelt. Die Dauer der Behandlung lag zwischen 0 und 300 Sekunden.

Der Vernetzungsgrad der Proben wurde bestimmt, in dem Flächen von 100 cm² ausgestanzt, gewogen und 15 Minuten lang in 60 g warmen Wasser gehalten, gespült, im Ofen bei 130 °C getrocknet und erneut gewogen wurden. Aus der Gewichtsdifferenz und dem bekannten Auftrag des Imprägnierharzes (13 g/m² trocken) lässt sich der lösliche Anteil des Polymers bestimmen. Vernetzungsgrad in % = 100 - löslicher Anteil in %.

Die erhaltenen Muster wurden mit einem Laborkalander satiniert (V= 16,4 min; p= 20 N/mm; T = 60°C).

Die satinierten Proben wurden auf einem Probenandruckgerät im Tiefdruckverfahren bedruckt. Die erhaltenen Messergebnisse bezüglich Vernetzungsgrad, Glätte und Fehlfläche sind in der folgenden Tabelle 2 wiedergegeben.

In Tabelle 2 sind auch Ergebnisse einer sogenannten Missing Dot-Analyse (MDA) wiedergegeben, die mit einem Agfa-Duo-Scanner und der PTS-Domas Software durchgeführt wurde. Dazu wurden die zu prüfenden Papiere bedruckt, die bedruckten Flächen gescannt, miteinander dadurch verglichen, dass überprüft wurde, ob auf allen Druckstellen die Druckpunkte wiedergegeben sind oder ob sogenannte Fehlstellen vorliegen. Das Ergebnis wird als Prozentwert der Fehlstellen, bezogen auf untersuchte Fläche, wiedergegeben.

**Tabelle 2**

| Zeit [s] | Vernetzungsgrad | Glätte Bekk [s] | | Fehlfläche [%] | |
|---|---|---|---|---|---|
| | | Beispiel 1 | Beispiel 2 | Beispiel 1 | Beispiel 2 |
| 0 | 0 | 163 | 180 | 7,6 | 8,2 |
| 25 | 36,1 | 125 | 130 | 11,8 | 12,5 |
| 50 | 48 | 125 | 130 | 12,0 | 13,0 |
| 100 | 58 | 97 | 115 | 11,5 | 12,3 |
| 200 | 60,6 | 115 | 120 | 10,8 | 13,2 |
| 300 | 74 | 113 | 120 | 11,7 | 12,5 |
| Vergleich I | 100 | 170 | | 12,0 | |
| Vergleich II | 100 | 158 | | 14,8 | |

## Patentansprüche

1. Vorimprägnat, das erhältlich ist durch Imprägnieren eines Rohpapiers mit einem thermisch härtbaren, formaldehydfreien Harz, **dadurch gekennzeichnet, dass** das Vorimprägnat nach Trocknung eine Restfeuchte von 2 bis 3 Gew.% aufweist, wobei das Harz ein thermoplastisches Verhalten zeigt, das Harz des Vorimprägnats unvernetzt ist und ein Polymer ist, das
a) mindestens ein durch radikalische Polymerisation erhältliches Polymerisat, das weniger als 5 Gew.% einer α,β-ethylenisch ungesättigten Mono- oder Dicarbonsäure einpolymerisiert enthält,
b) mindestens ein durch radikalische Polymerisation erhältliches Polymerisat, das mehr als 15 Gew.% einer α,β-ethylenisch ungesättigten Mono- oder Dicarbonsäure einpolymerisiert enthält, und
c) mindestens ein Alkanolamin mit mindestens zwei Hydroxylgruppen,
enthält.

2. Vorimprägnat nach Anspruch 1, **dadurch gekennzeichnet, dass** der Vernetzungsgrad des Harzes bei einer Wärmebehandlung des Vorimprägnats über einen Zeitraum von 40 Sekunden bei 132 °C höchstens 80% beträgt.

3. Vorimprägnat nach Anspruch 1 oder 2, **dadurch gekennzeichnet, dass** das Harz im Gemisch mit einem weiteren polymeren Material, Polymer II, im Verhältnis 90:10 bis 65:35, insbesondere 80:20 bis 70:30, vorliegt.

4. Vorimprägnat nach Anspruch 3, **dadurch gekennzeichnet, dass** das Polymer II ein Styrol/Butadien oder Styrol-/Acrylat-Copolymer ist.

5. Vorimprägnat nach Anspruch 3 oder 4, **dadurch gekennzeichnet, dass** das Polymer II ein durch UV/Elektronenstrahlen härtbares polymeres Material ist.

6. Vorimprägnat nach einem der Ansprüche 1 bis 5, **dadurch gekennzeichnet, dass** das Harz in einer Menge von 10 bis 70% des Flächengewichts des Rohpapiers im Rohpapier enthalten ist.

7. Vorimprägnat nach einem der Ansprüche 1 bis 6, **dadurch gekennzeichnet, dass** auf mindestens einer Seite des Rohpapiers eine strahlenhärtbare Schicht enthalten ist.

8. Vorimprägnat nach Anspruch 7, **dadurch gekennzeichnet, dass** auf der Vorderseite des Rohpapiers eine strahlenhärtbare Acrylatschicht enthalten ist.

9. Vorimprägnat nach einem der Ansprüche 1 bis 8, **dadurch gekennzeichnet, dass** das Vorimprägnat ein Dekorvorimprägnat ist.

## Claims

1. A prepreg, which can be obtained by impregnating a raw paper with a heat curable formaldehyde-free resin, **characterized in that** after drying the prepreg has a residual moisture content of 2 to 3 % by weight, wherein said resin shows a thermoplastic behaviour, said resin of the prepreg is not cross-linked and is a polymer, which contains
a) at least one polymer obtainable by radical polymerisation, which contains less than 5 % by weight of an α,β-ethylenically unsaturated mono or dicarboxylic acid polymerised therein,
b) at least one polymer obtainable by radical polymerisation, which contains more than 15 % by weight of an α,β-ethylenically unsaturated mono or dicarboxylic acid polymerised therein, and
c) at least one alkanolamine with at least two hydroxyl groups.

2. The prepreg according to claim 1, **characterized in that** the degree of cross-linking of the resin in the case of thermal treatment of the prepreg over a period of 40 seconds at 132 °C amounts to at most 80 %.

3. The prepreg according to claim 1, **characterized in that** the resin is present in mixture with a further polymeric material, polymer II, in a ratio of 90:10 to 65:35, in particular 80:20 to 70:30.

4. The prepreg according to claim 3, **characterized in that** the polymer II is a styrene/butadiene or a styrene/acrylate copolymer.

5. The prepreg according to claim 3 or 4, **characterized in that** the polymer II is a polymeric material curable by UV/electron radiation.

6. The prepreg according to any of claims 1 to 5, **characterized in that** the resin is contained in the base paper in a quantity of 10 to 70 % of the weight per unit area of the raw paper.

7. The prepreg according to any of claims 1 to 6, **characterized in that** a radiation curable layer is contained on at least one side of the base paper.

8. The prepreg according to claim 7, **characterized in that** a radiation curable acrylate layer is contained on the face of the base paper.

9. The prepreg according to any of claims 1 to 8, **characterized in that** the prepreg is a decorative prepreg.

## Revendications

1. Préimprégné qui peut être obtenu par imprégnation d'un papier brut avec une résine exempte de formaldéhyde, thermodurcissable, **caractérisé en ce que** le préimprégné présente après séchage une humidité résiduelle de 2 à 3 % en poids, sachant que la résine présente un comportement thermoplastique, que la résine du préimprégné n'est pas réticulée et est un polymère, qui contient
a) au moins un polymérisat, qui, pouvant être obtenu par polymérisation radicalaire, contient moins de 5 % en poids d'un acide monocarboxylique ou dicarboxylique à insaturation éthylénique α, β, incorporé par polymérisation,
b) au moins un polymérisat, qui, pouvant être obtenu par polymérisation radicalaire, contient plus de 15 % en poids d'un acide monocarboxylique ou dicarboxylique à insaturation éthylénique α, β, incorporé par polymérisation,
c) au moins une alcanolamine avec au moins deux groupes d'hydroxyle.

2. Préimprégné selon la revendication 1, **caractérisé en ce que** le degré de réticulation de la résine lors d'un traitement thermique du préimprégné pendant un laps de temps de 40 secondes, à une température de 132 °C, est de 80 % au maximum.

3. Préimprégné selon revendication 1 ou 2, **caractérisé en ce que** la résine est contenue dans le mélange avec une autre matière polymérique, polymère II, dans un rapport de 90:10 à 65:35, en particulier de 80:20 à 70:30.

4. Préimprégné selon la revendication 3, **caractérisé en ce que** le polymère II est un copolymère styrène / butadiène ou styrène / acrylate.

5. Préimprégné selon revendication 3 ou 4, **caractérisé en ce que** le polymère II est une matière polymérique durcissable aux rayons UV / rayons électroniques.

6. Préimprégné selon l'une des revendications 1 à 5, **caractérisé en ce que** la résine est contenue dans le papier brut en quantité de 10 à 70 % de la masse au mètre carré du papier brut.

7. Préimprégné selon l'une des revendications 1 à 6, **caractérisé en ce que**, sur au moins une face du papier brut, est prévue une couche radiodurcissable.

8. Préimprégné selon la revendication 7, **caractérisé en ce que**, sur la face antérieure du papier brut est prévue une couche d'acrylate radiodurcissable.

9. Préimprégné selon l'une des revendications 1 à 8, **caractérisé en ce que** le préimprégné est un préimprégné de décoration.
